# EUROPEAN PATENT APPLICATION

(11) **EP 3 343 398 A1**
(43) Date of publication of application: **04.07.2018**
(21) Application number: 16855744.5
(22) Date of filing: 13.10.2016
(51) Int. Cl.: G06F 17/30, G06Q 50/10

(54) **CONTENT PROVIDING METHOD AND ELECTRONIC DEVICE FOR PERFORMING SAME**

(30) Priority: 13.10.2015 KR 20150142921
(71) Applicant: Samsung Electronics Co., Ltd., Suwon-si, Gyeonggi-do 16677 (KR)
(72) Inventor: EOM, Yu Youl, Yongin-si Gyeonggi-do 16927 (KR); KIM, Dae Sung, Suwon-si Gyeonggi-do 16695 (KR); LEE, Chang Ho, Suwon-si Gyeonggi-do 16532 (KR)
(74) Representative: Grootscholten, Johannes A.M.
(86) International application number: PCT/KR2016/011500
(87) International publication number: WO 2017/065527

(57) **Abstract**

Disclosed are a method for preventing consumption of unnecessary times and data traffics by displaying some of contents including in a webpage that is to be changed on a webpage before the change, and an electronic device performing the same.

## Description

### [Technical Field]

The present disclosure relates to a method for providing contents by using a web browser and an electronic device performing the same.

### [Background Art]

Thanks to the recent development of the mobile communication technologies, electronic devices have come to freely access wired/wireless communication networks while being easily carried. For example, the electronic devices such as smartphones may support various functions, such as access to the internet and chatting, as well as voice communication and transmission and reception of text messages.

For example, the electronic devices may access to networks and/or the internet by executing web browser application programs, and may be provided with various contents (e.g., texts, images, audios, and videos) from the networks and/or the internet.

The above information is presented as background information only to assist with an understanding of the present disclosure. No determination has been made, and no assertion is made, as to whether any of the above might be applicable as prior art with regard to the present disclosure.

### [Disclosure]

### [Technical Problem]

The electronic devices may download a main resource (e.g., a HTML file) of a webpage and various resources (so called 'sub resources) for rendering the webpage by using the web browser application program (hereinafter, 'browsers' or 'web browsers'). The electronic devices may output the (contents of) the webpage through displays and/or speakers based on the resources.

Because the resources of the webpages are received whenever webpages are changed, times for receiving all resources of the changed webpages are required and data traffics for downloading all the resources occur.

For example, the webpages that are to be changed on the web browsers may include only advertising contents or harmful contents which the users do not desire. In this way, if the webpage returns to the webpage before the change as contents desired by the user are not present in the webpage that is to be changed, unnecessary times and data traffics may be consumed.

Aspects of the present disclosure are to address at least the above-mentioned problems and/or disadvantages and to provide at least the advantages described below. Accordingly, an aspect of the present disclosure is to provide a method for preventing consumption of unnecessary times and data traffics by displaying some of contents including in a webpage that is to be changed on a webpage before the change, and an electronic device performing the same.

### [Technical Solution]

An electronic device according to an embodiment of the present disclosure may include a communication circuit, a display including a first side extending in a first direction, and a second side extending in a second direction that is substantially perpendicular to the first direction, a processor electrically connected to the communication circuit and the display, and a memory electrically connected to the processor. The memory stores instructions which, when executed, cause the processor to display a web browser at at least a part of the display, receive first information related to a first webpage including a plurality of items linked to a plurality of webpages, respectively, and arranged in one of the first direction or the second direction on the display, display the first webpage on the web browser by using the received first information, receive a user input for selecting a first item of the displayed plurality of items of the first webpage, move a second item of the plurality of items that is immediately next to the first item such that the second item becomes far away from the first item in the one direction on the web browser, and display at least some of contents included in the second webpage linked to the first item in a space between the first item and the moved second item.

Further, an electronic device according to another embodiment of the present disclosure may include a display, a communication circuit that sets communication with a network, a processor electrically connected to the communication circuit and the display, and a memory electrically connected to the processor. The memory stores instructions which, when executed, cause the processor to display a first webpage including at least one item on the display, if one of the at least one item is selected, extract a keyword from the selected item, specify some contents in a second webpage linked to the selected item and including one or more contents, based on the extracted keyword, receive a resource related to the some contents through the communication circuit, and display the some contents in a specific area on the first webpage by using the received resource.

Further, a method for providing contents according to an embodiment of the present disclosure may include an operation of displaying a first webpage including at least one item on the display, an operation of if one of the at least one item is selected, extracting a keyword from the selected item, an operation of specifying some contents in a second webpage linked to the selected item and including one or more contents, based on the extracted keyword, an operation of receiving a resource related to the some contents through a network, and an operation of displaying the some contents in a specific area on the first webpage by using the received resource.

### [Advantageous Effects]

According to various embodiments of the present disclosure, when an item displayed on a first webpage is selected, the electronic device may display some contents of a second webpage linked to the item on the first webpage. The some contents may be specified based on a keyword extracted from the selected item. Through this, the user may identify a core part of the contents, which is to be obtained from the selected item, on the first webpage without changing the page. In addition, the present disclosure may provide various effects that are directly or indirectly recognized.

Other aspects, advantages, and salient features of the disclosure will become apparent to those skilled in the art from the following detailed description, which, taken in conjunction with the annexed drawings, discloses various embodiments of the present disclosure.

### [Description of Drawings]

The above and other aspects, features, and advantages of certain embodiments of the present disclosure will be more apparent from the following description taken in conjunction with the accompanying drawings, in which:
FIG. 1 is a block diagram of an electronic device according to an embodiment;
FIG. 2 illustrates a flowchart of a method for providing contents according to an embodiment;
FIGS. 3A to 3E illustrate displays of an electronic device, by which the method for providing contents according to an embodiment is realized;
FIG. 4 is a flowchart illustrating a method for providing contents according to a second embodiment;
FIG. 5 illustrates a display of an electronic device, by which the method for providing contents according to the second embodiment is realized;
FIG. 6 is a sequence diagram illustrating a method for providing contents according to a third embodiment;
FIG. 7 is a flowchart illustrating a method for providing contents according to a fourth embodiment;
FIG. 8 is a block diagram of an electronic device according to various embodiments; and
FIG. 9 illustrates a block diagram of a program module according to various embodiments.

### [Mode for Invention]

Hereinafter, various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar elements may be marked by similar reference numerals.

In this disclosure, the expressions "have", "may have", "include" and "comprise", or "may include" and "may comprise" used herein indicate existence of corresponding features (e.g., elements such as numeric values, functions, operations, or components) but do not exclude presence of additional features.

In this disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in this disclosure may be used to refer to various elements regardless of the order and/or the priority and to distinguish the relevant elements from other elements, but do not limit the elements. For example, "a first user device" and "a second user device" indicate different user devices regardless of the order or priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in this disclosure may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in this disclosure are used to describe specified embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of this disclosure. In some cases, even if terms are terms which are defined in this disclosure, they may not be interpreted to exclude embodiments of this disclosure.

An electronic device according to various embodiments of this disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of this disclosure may not be limited to the above-described electronic devices and may include other electronic devices and new electronic devices according to the development of technologies.

Hereinafter, electronic devices according to various embodiments will be described with reference to the accompanying drawings. In this disclosure, the term "user" may refer to a person who uses an electronic device or may refer to a device (e.g., an artificial intelligence electronic device) that uses the electronic device.

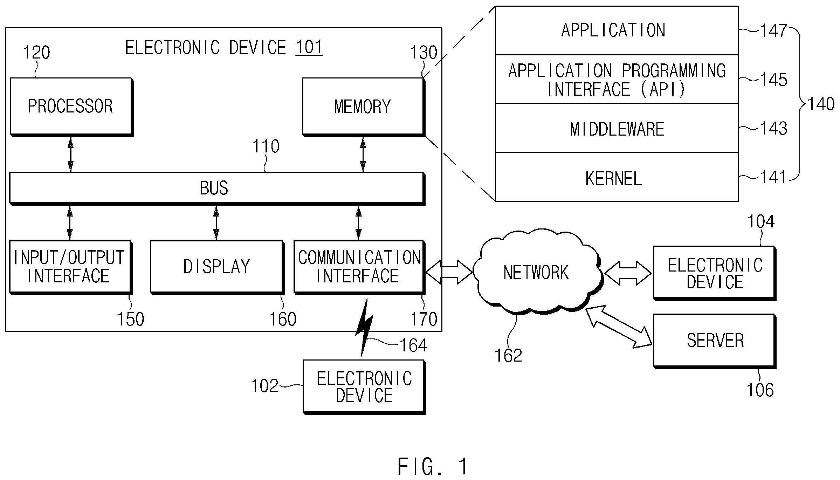

FIG. 1 illustrates a block diagram of an electronic device, according to an embodiment.

Referring to FIG. 1, according to various embodiments, an electronic device 101, 102, and 104, or a server 106 (e.g., a web server) may be connected each other over a network 162 or a short range communication 164. The electronic device 101 may include a bus 110, a processor 120, a memory 130, an input/output interface 150, a display 160, and a communication circuit 170. According to an embodiment, the electronic device 101 may not include at least one of the above-described elements or may further include other element(s).

For example, the bus 110 may interconnect the above-described elements 110 to 170 and may include a circuit for conveying communications (e.g., a control message and/or data) among the above-described elements.

The processor 120 may be electrically connected with other elements 110 to 170 of the electronic device 101 through the bus 110. The processor 120 may include one or more of a central processing unit (CPU), an application processor (AP), or a communication processor (CP). For example, the processor 120 may perform an arithmetic operation or data processing associated with control and/or communication of the elements 110 to 170 depending on various instructions stored in the memory 130.

The memory 130 may include a volatile and/or nonvolatile memory. For example, the memory 130 may store commands or data associated with at least one other element(s) of the electronic device 101. According to an embodiment, the memory 130 may store software and/or a program 140. The memory 130 may be electrically connected with the processor 120.

According to an embodiment, the processor 120 may store various (main or sub) resources received through a network, document object model (DOM) tree data created by the processor 120, render tree data, or the like in the memory 130 according to an HTTP cache policy. The (main or sub) resources, the DOM tree data, the rendering tree data, or the like may be managed as log data, and at least some of them may be used to display contents by the display 160.

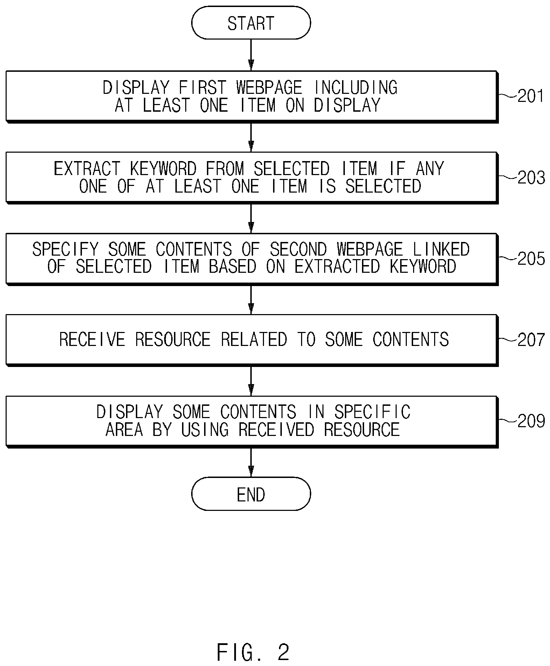

Further, according to an embodiment, the memory 130 may store various instructions including operations performed by the processor 120 when the instructions are executed. The operations performed by the processor 120 according to the various instructions will be described with reference to FIGS. 2 to 7.

The program 140 may include, for example, a kernel 141, a middleware 143, an application programming interface (API) 145, and/or an application program (or "an application") 147. At least a part of the kernel 141, the middleware 143, or the API 145 may be referred to as an "operating system (OS)".

For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete elements of the electronic device 101 so as to control or manage system resources.

The middleware 143 may perform, for example, a mediation role such that the API 145 or the application program 147 communicates with the kernel 141 to exchange data.

Furthermore, the middleware 143 may process task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the priority assigned to the at least one, which makes it possible to perform scheduling or load balancing on the one or more task requests.

The API 145 may be, for example, an interface through which the application program 147 controls a function provided by the kernel 141 or the middleware 143, and may include, for example, at least one interface or function (e.g., an instruction) for a file control, a window control, image processing, a character control, or the like.

The input/output interface 150 may play a role, for example, of an interface which transmits a command or data input from a user or another external device, to other element(s) of the electronic device 101. Furthermore, the input/output interface 150 may output a command or data, received from other element(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display.

The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body.

For example, the communication circuit 170 may establish communication between the electronic device 101 and an external device (e.g., the first external electronic device 102, the second external electronic device 104, or the server 106 (e.g., a web server)). For example, the communication circuit 170 may be connected to the network 162 over wireless communication or wired communication to establish the communication with the external device (e.g., the second external electronic device 104 or the server 106).

The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the short range communication 164. The short range communication 164 may include at least one of wireless fidelity (Wi-Fi), Bluetooth, near field communication (NFC), magnetic stripe transmission (MST), a global navigation satellite system (GNSS), or the like.

The MST may generate a pulse in response to transmission data using an electromagnetic signal, and the pulse may generate a magnetic field signal. The electronic device 101 may transfer the magnetic field signal to point of sale (POS), and the POS may detect the magnetic field signal using a MST reader. The POS may recover the data by converting the detected magnetic field signal to an electrical signal.

The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in this disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., LAN or WAN), an Internet, or a telephone network.

Each of the first and second external electronic devices 102 and 104 may be a device of which the type is different from or the same as that of the electronic device 101. According to an embodiment, the server 106 may include a group of one or more servers. According to various embodiments, all or a portion of operations that the electronic device 101 will perform may be executed by another or plural electronic devices (e.g., the electronic device 102 or 104 or the server 106). According to an embodiment, in the case where the electronic device 101 executes any function or service automatically or in response to a request, the electronic device 101 may not perform the function or the service internally, but, alternatively additionally, it may request at least a portion of a function associated with the electronic device 101 from another device (e.g., the electronic device 102 or 104 or the server 106). The other electronic device (e.g., the electronic device 102 or 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

FIG. 2 illustrates a flowchart of a method for providing contents according to an embodiment.

Referring to FIG. 2, the method of providing contents according to an embodiment may include operations 201 to 209. Operations 201 to 209, for example, may be performed by the electronic device 101 of FIG. 1. Respective operations 201 to 209 may be implemented by instructions that may be performed (or executed) by the processor 120 of the electronic device 101. The instructions, for example, may be stored in the memory 130 of the electronic device 101. Hereinafter, the reference numerals of FIG. 1 are used in a description of operations 201 to 209.

According to an embodiment, in operation 201, the processor 120 may execute a browser application, and may display a first webpage including at least one item on the display. The at least one item may correspond to an object linked to a webpage that is different from the first webpage. According to an embodiment, the at least one item may include a text string, an image, or (a preview) of a video.

According to an embodiment, in operation 203, the processor 120 may extract a keyword from the selected item if one of the at least one item is selected. For example, the keyword may be extracted from at least one of a text, a tag, or meta information of the selected item. The processor 120, for example, may extract the keyword with reference to the main resource (e.g., an HTML file) of the first webpage, which corresponds to the selected item.

According to an embodiment, in operation 205, the processor 120 may specify some contents of the second webpage linked to the selected item based on the keyword extracted in operation 203. The second webpage may include one or more contents.

According to an embodiment, the processor 120 may receive the main resource (e.g., an HTML file) of the second webpage in response to selection of the item through the communication circuit 170. The processor 120, for example, may constitute a DOM tree by parsing the main resource of the second webpage 302. According to various embodiments, the processor 120 may store DOM tree data according to the parsing and/or rendering tree data corresponding to the DOM tree data in the memory 130.

The processor 120, for example, may analyze a context of the keyword extracted in operation 203 with respect to the parsed main resource. Various analysis techniques, such as analysis of a term frequency or a semantic analysis, for example, may be used in the analysis of the context. The processor 120 may specify the some contents (e.g., most meaningful contents) by specifying a part of the main resource of the second webpage, which corresponds to the extracted keyword, according to the analysis of the context.

According to an embodiment, a part of the main resource of the second webpage, which corresponds to the extracted keyword, may not be specified even by the various analysis techniques. In this case, the processor 120 may specify the first contents included in the second webpage or a title part of the second webpage as the some contents

According to an embodiment, in operation 207, the processor 120 may receive a resource related to the some contents specified in operation 205 through the communication circuit 170 (or the network connected through the communication circuit).

For example, the processor 120 may receive a sub resource of a part of the main resource (e.g., an HTML file) of the second webpage, which corresponds to the keyword extracted in operation 203 through the communication circuit 170 when a resource related to the specified some contents is received. The sub resource may correspond to a resource for rendering the specified some contents to the display. The sub resource, for example, may include at least one of a cascading style sheet (CSS) file regarding a part corresponding to the extracted keyword, a JavaScript file, an image file, a video file, or an audio file.

According to various embodiments, the resource related to the specified some contents may be stored in the memory 130 as log data. At least a part of the resource stored in the memory 130 may be used for display (or rendering) of contents by the display 160.

In operation 209, the processor 120 may display the some contents specified in operation 205 in a specific area on the first webpage by using the resource received in operation 207. For example, the specific area may be secured by moving or rearranging at least one item included in the first webpage. The movement or rearrangement of the at least one item, for example, may be accompanied by reconfiguration of a rendering tree of the first webpage. Meanwhile, as another example, the specific area may be secured while being overlaid on the first webpage.

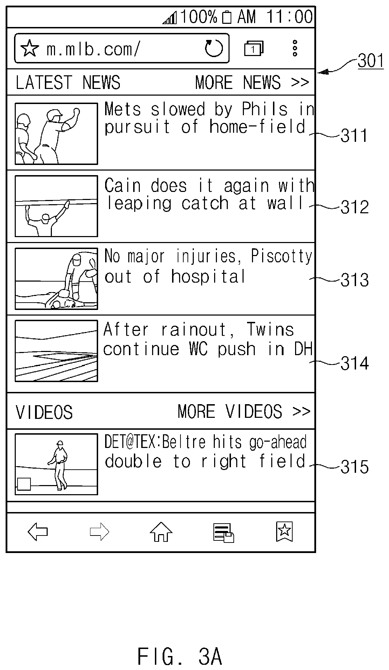

FIGS. 3A to 3E illustrate displays of an electronic device, by which the method for providing contents according to an embodiment is realized.

Referring to FIG. 3A, for example, the processor 120 may display the first webpage 301 including a plurality of items 311, 312, 313, 314, and 315 on the display. For example, the plurality of items 311, 312, 313, 314, and 315 may correspond to objects, to which different webpages are linked (refer to operation 201 of FIG. 2).

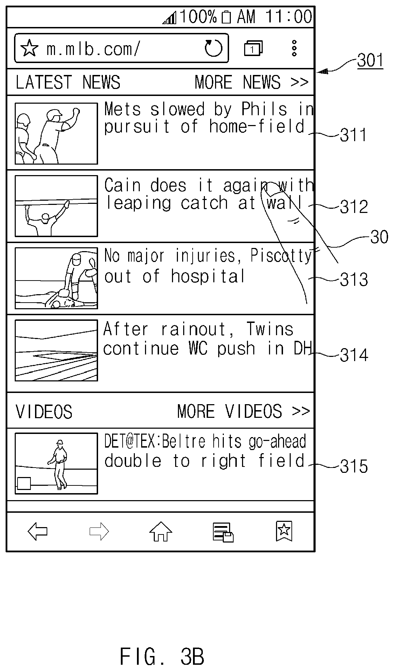

Referring to FIG. 3B, the user may select one item 312 of the plurality of items 311, 312, 313, 314, and 315 included in the first webpage 301 by using a part 30 (e.g., a finger) of the body of the user. If the item 312 is selected, the processor 120 may extract a keyword from the selected item 312. For example, the processor 120 may extract 'Cain', 'leaping', 'catch' or 'wall' from "Cain does it again with leaping catch at wall" as a keyword (refer to operation 203 of FIG. 2).

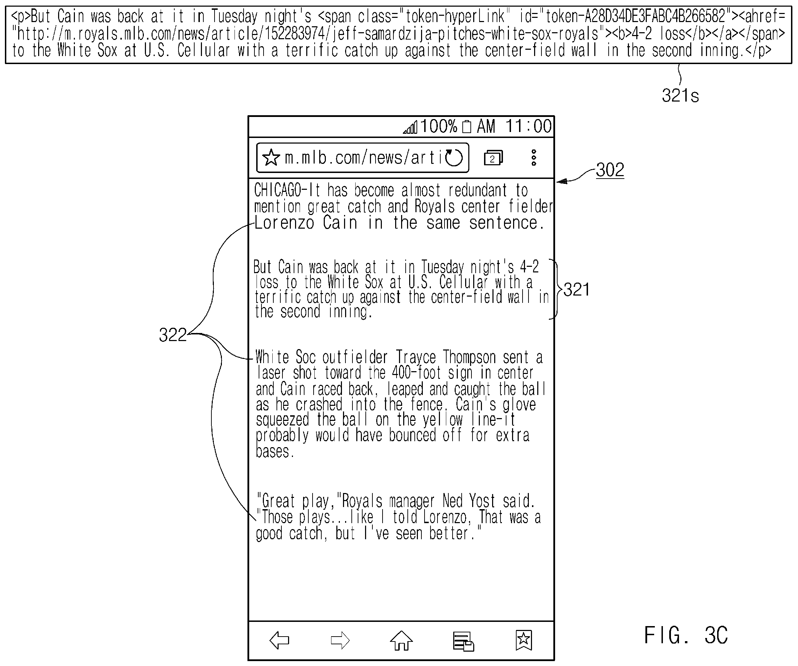

Referring to FIG. 3C, for example, the processor 120 may receive an HTML file of the second webpage 302 from a network if the item 312 of FIG. 3B is selected. The second webpage 302 may include a plurality of contents 321 and 322 while being linked to the item 312.

According to an embodiment, the processor 120 may analyze a context of the extracted keyword ('Cain', 'leaping', 'catch', or 'wall') for the received HTML file of the second webpage 302. The processor 120 may specify a part of the HTML file of the second webpage 302, which corresponds to the keyword, according to the analysis of the context. For example, the processor 120 may specify a part 321s of the entire HTML file of the second webpage 302 according to the analysis of the context. Through this, the processor 120 may specify the some contents 321 included in the second webpage 302 (refer to operation 205 of FIG. 2).

According to an embodiment, the processor 120 may receive a resource related to the specified contents 321 through a network. For example, the processor 120 may receive a sub resource of the part 321s of the entire HTML file of the second webpage 302, which corresponds to the extracted keyword, through a network. As the sub resource is received, the specified contents 321 may be rendered on the first webpage to be displayed (refer to operations 207 and 209 of FIG. 2).

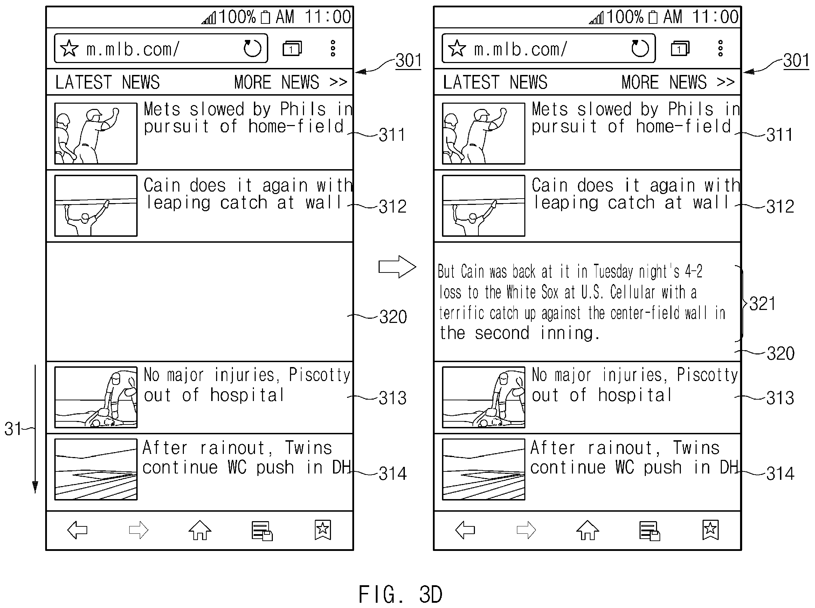

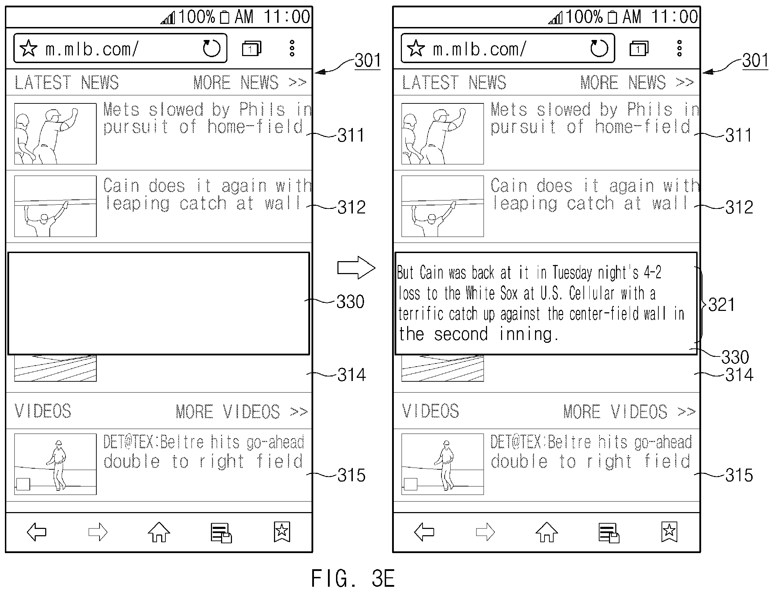

Referring to FIGS. 3D and 3E, the processor 120 may display the specified contents 321 in a specific area of the first webpage 301 by using the received sub resource. Further, although not illustrated in FIGS. 3D and 3E, according to various embodiments, the extracted keyword ('Cain', 'leaping', 'catch', or 'wall') of the specified contents 321 may be displayed while being emphasized by a highlight.

According to various embodiments of the present disclosure, referring to FIG. 3D, the specific area may be secured by moving or rearranging at least one item included in the first webpage 301 by the processor 120. For example, if the item 312 is selected, the processor 120 may move at least one item 313 or 314 that is immediately next to the selected item 312 such that the at least one item 313 or 314 may become far away from the selected item 312 in one direction 31 of a first direction or a second direction. Then, an animation effect of moving while sliding may be added to at least one item 313 or 314. A space between the selected item 312 and the moving at least one item 313 or 314 may correspond to the specific area 320. Further, the first direction and the second direction may correspond to a first side of the display and a second side extending in a direction that is perpendicular to the first side, respectively. The at least one item 313 or 314 may be arranged in advance in one direction 31 of the first direction or the second direction.

Referring to FIG. 3E, as another example, a specific area in which the specified contents 321 are displayed may be secured while being overlaid on the first webpage 301. If the item 312 is selected, the processor 120 may create a specific area 330 on the first webpage 301 as a new view to display the created specific area 330. The specific area 330 created as the new view, for example, may be transparent, translucent, or opaque.

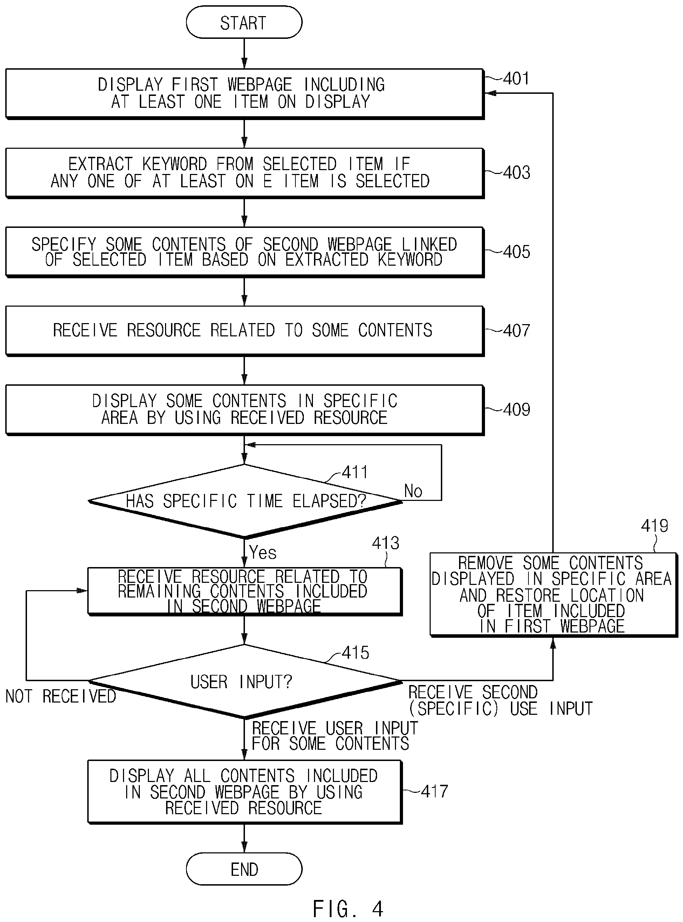

FIG. 4 is a flowchart illustrating a method for providing contents according to a second embodiment.

Referring to FIG. 4, the method of providing contents according to an embodiment may include operations 401 to 419. Because operations 401 to 409 of FIG. 4 correspond to operations 201 to 209 of FIG. 2, a repeated description thereof will be omitted. Further, because operations 401 to 409 of FIG. 4 may be performed by the electronic device 101 of FIG. 1, the reference numerals of FIG. 1 will be used.

In operation 411, the processor 120 may determine whether a specific time elapses after the contents specified in operation 405 are displayed in a specific area on the first webpage. When the specific time elapses, the processor 120 may proceed to operation 413, and otherwise, may repeat operation 411.

According to various embodiments, although not illustrated in FIG. 4, the processor 120 may proceed to operation 419 when a cancel input (e.g., pressing of a back button) is received even if the specific time does not elapse.

Further, according to various embodiments, operation 411 may be omitted. For example, operation 413 may be performed next to operation 409. Further, the sequence of operation 413 and 415 is not limited to the sequence of FIG. 4, and for example, operation 415 may be performed before operation 413.

In operation 413, the processor 120 may receive (or download) a resource related to the remaining contents included in the second webpage through the communication module 170 (or a network). For example, because the resource related to the some contents included in the second webpage has been received in operation 407, the processor 120 may receive the resource related to the remaining contents included in the second webpage through the network.

According to an embodiment, the resource related to the remaining contents included in the second webpage may be received and loaded to a background. Accordingly, the display 160 may still display the first webpage and the some contents specified in operation 405. According to various embodiments, the resource related to the remaining contents may be stored in the memory 130 as log data. At least a part of the resource stored in the memory 130 may be used for display (or rendering) of contents by the display 160.

In operation 415, the processor 120 may determine which user input has been received. For example, if no user input is received, the processor 120 may continue to perform operation 413. As another example, if a user input for the some contents has been received in operation 415, the processor 120 may proceed to operation 417. As another example, if a (specific) user input that is different from the user input for the some contents, the processor 120 may proceed to operation 419.

In operation 417, because the user input for the some contents has been received, the processor 120 may display all contents included in the second webpage on the display 160 by using the resource (received in operation 407) related to the some contents and the resource (received in operation 413) related to the remaining contents. For example, the first webpage displayed on the display 160 may be changed to the second webpage. According to various embodiments, the processor 120 may perform a control to display the specified some contents on the second webpage of the display 160 through automatic scrolling after displaying the changed second webpage.

For example, the resources related to the some and remaining contents may be stored in the memory 130. Further, the DOM tree data created through the parsing of the second webpage and the rendering tree data corresponding thereto also may be stored in the memory 130 (refer to the description of operation 205 corresponding to operation 405). The processor 120 may use various pieces of data stored in the memory 130 to display the contents included in the second webpage. In this case, the loading speed (or display speed) of the second webpage may be improved.

According to an embodiment, in operation 419, because a second (specific) user input that is different from the user input for the some contents has been received, the processor 120 may remove the some contents displayed in the specific area from the first webpage. The processor 120 may restore locations of the items included in the first webpage and may return to operation 401. The second (specific) user input that is different from the user input for the some contents, for example, may include a cancel input or an input for an area of the first webpage, except for the specific area.

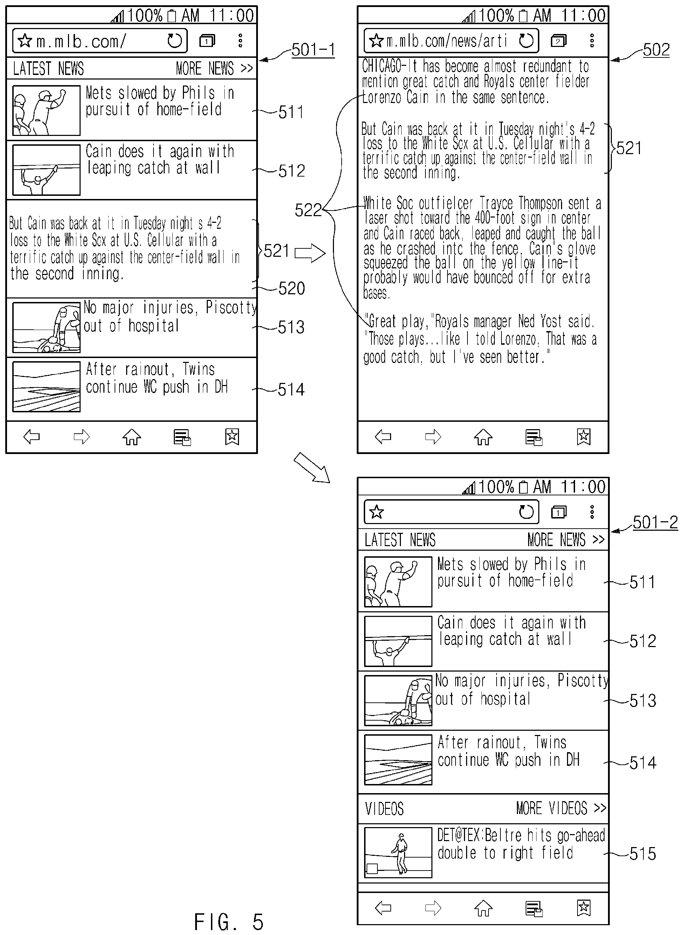

FIG. 5 illustrates a display of an electronic device, by which the method for providing contents according to the second embodiment is realized.

Referring to FIG. 5, 'the electronic device according to an embodiment may display a first webpage 501-1 on a display. A plurality of items 511, 512, 513, and 514 and some contents of the second webpage 502 linked to the item 512 may be displayed in a specific area 520 of the first webpage 501-1.

The first webpage 501-1 may correspond to the first webpage 301 of FIG. 3D, and the plurality of items 511, 512, 513, and 514 may correspond to the plurality of items 511, 512, 513, and 514 of FIG. 3D. Further, for example, the first webpage 501-1 of FIG. 5 may correspond to the webpage displayed in FIGS. 3A to 3D.

Referring to the first webpage 501-1, after some contents 521 of the second webpage 502 are displayed in a specific area, the processor of the electronic device may determine whether a specific time (e.g., 1 second or 2 seconds) elapses (refer to operation 411 of FIG. 4). If the specific time elapses, the processor may receive a resource related to the remaining contents 522 included in the second webpage 502 through a network (refer to operation 413 of FIG. 4). For example, the resource related to the remaining contents 522 may be received to a background.

For example, if a user input for the some contents 521 displayed in the specific area 520 of the first webpage 501-1 is received, the processor may display all contents 521 and 522 included in the second webpage on the display by using a resource related to the some contents 521 and a resource related to the remaining contents 522. For example, the first webpage 501-1 may be changed to the second webpage 502 to be displayed (refer to operations 415 and 417 of FIG. 4).

As another example, if a (specific) user input that is different from the user input for the some contents 521 (e.g., a selection input for a return button or an input for an area of the first webpage 501-1, except for the specific area 520) is received, the processor may remove a specific area 520 and the some contents 521 displayed in the specific area 520 from the first webpage 501-1. The processor may restore locations of the at least one item 513 and 514 included in the first webpage 501, and may return to the first webpage 501-2 before the item 512 is selected. According to various embodiments, when the location of the at least one item 513 and 514 is restored, an animation effect, for example, of moving while sliding may be added to the at least one item 513 and 514. Accordingly, an item 515 that is next to the item 514 may move while sliding (refer to operation 419).

As another example, if no input is received by the electronic device, the processor may continue to display the first webpage 501-1 on the display.

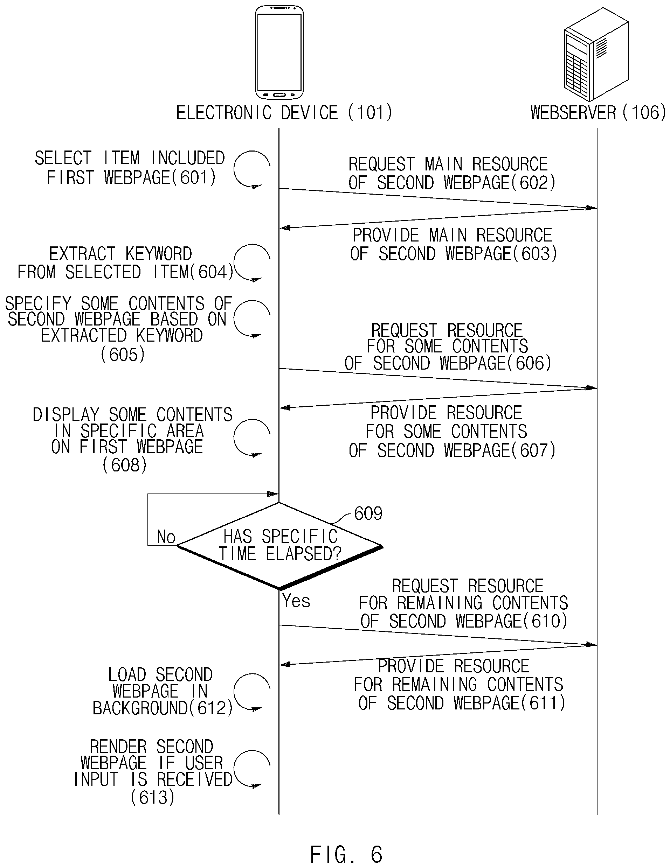

FIG. 6 is a sequence diagram illustrating a method for providing contents according to a third embodiment.

Referring to FIG. 6, a sequence diagram of the method for providing contents according to an embodiment is illustrated. The sequence diagram may include operations 601 to 613. Operations 601 to 613 may correspond to at least one operation of FIG. 4.

In operation 601, the user of the electronic device 101 may select one of at least one item included in a first webpage.

In operation 602, the electronic device 101 may request a main resource (e.g., an HTML file) of a second webpage from a webserver 106 connected to the electronic device 101 through a network. The second webpage may correspond to a webpage linked to the item selected in operation 601.

In operation 603, the electronic device 101 may receive a main resource of the second webpage from the webserver 106.

In operation 604, the electronic device 101 may extract a keyword from the item selected in operation 601. For example, the electronic device 101 may extract the keyword with reference to a part of the main resource of the first webpage, which corresponds to the selected item. According to various embodiments, operation 604 is not restricted to the sequence of FIG. 6. For example, operation 604 may be performed immediately after (or substantially at the same time when) operation 601 is performed.

In operation 605, the electronic device 101 may specify some contents of the second webpage linked to the selected item based on the keyword extracted in operation 604. For example, the electronic device 101 may constitute a DOM tree by parsing the main resource of the second webpage received in operation 603. The electronic device 101 may analyze a context of the keyword extracted in operation 604, for the parsed main resource. The electronic device 101 may specify a part of the main resource of the second webpage, which corresponds to the extracted keyword, according to the analysis of the context. Through this, some contents corresponding to the keyword extracted in operation 604 may be specified.

In operation 606, the electronic device 101 may receive request a resource of the specified some contents of the second webpage from the webserver 106. For example, the electronic device 101 may request a sub resource of a part of the main resource of the second webpage, which corresponds to the keyword extracted in operation 604, from the webserver 106.

In operation 607, the electronic device 101 may receive a resource (or a sub resource of the main resource of the second webpage, which corresponds to the keyword extracted in operation 604) for the specified some contents from the webserver 106. According to various embodiments, the resource related to the specified some contents may be stored in the memory as log data.

In operation 608, the electronic device 101 may display the specified some contents in a specific area of the first webpage by using the resource received in operation 607. For example, the specific area may be secured by moving or rearranging at least one item included in the first webpage or while being overlaid on the first webpage.

In operation 609, the electronic device 101 may determine whether a specific time elapses after the some contents are displayed on the display. If the specific time has not elapsed ('No' in operation 609), the electronic device 101 may stand by until the specific time elapses. If the specific time has elapsed, the electronic device may proceed to operation 610.

In operation 610, the electronic device 101 may request a resource related to the remaining contents included in the second webpage from the webserver 106. Because the resource related to the some contents included in the second webpage has been received in operation 607, the electronic device 101 may request a resource related to the remaining contents included in the second webpage from the webserver 106.

In operation 611, the electronic device 101 may receive a resource for the remaining contents of the second webpage from the webserver 106. According to an embodiment, the resource related to the remaining contents may be received to a background and may be stored in the memory 130 as log data.

In operation 612, the electronic device 101 may load a main resource of the second webpage received in operation 603, a resource (sub resource) for the some contents received in operation 607, and a resource (sub resource) for the remaining contents received in operation 611 in the background.

In operation 613, if a user input for the some contents displayed in the first webpage is received, the electronic device 101 may display (or render) the second webpage on the display. In detail, the electronic device 101 may constitute a DOM tree by using the main resource of the second webpage, and may constitute a rendering tree of the second webpage based on the DOM tree and the (sub) resources received in advance. The electronic device 101 may display all the contents included in the second webpage on the display according to the rendering tree.

According to various embodiments of the present disclosure, when an item displayed on the first webpage is selected, some contents of the second webpage linked to the item may be read on the first webpage. The some contents may be specified based on a keyword extracted from the selected item. Through this, the user may identify core contents, which is to be obtained from the selected item, on the first webpage without changing the page.

Further, if the item is selected, because only a (sub) resource for displaying the some contents is received (or downloaded) from a network, all (sub) resources of the second webpage may not be received. Through this, a consumption time and a data traffic for reading the page may decrease.

Further, according to various embodiments, after the some contents are displayed on the first webpage, a (sub) resource related to the remaining contents of the second webpage may be received to a background. Accordingly, because the electronic device may use a (sub) resource related to the some and remaining contents when the first webpage is changed to the second webpage, a loading time for reading the second webpage may be remarkably reduced.

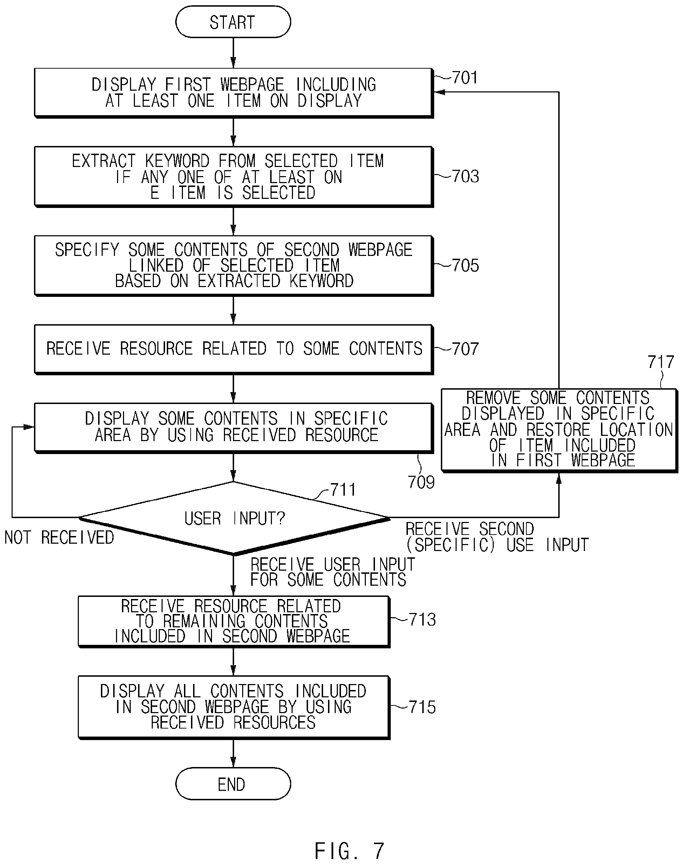

FIG. 7 is a flowchart illustrating a method for providing contents according to a fourth embodiment.

Referring to FIG. 7, the method of providing contents according to an embodiment may include operations 701 to 717. Because operations 701 to 709 of FIG. 7 correspond to operations 201 to 209 of FIG. 2, a repeated description thereof will be omitted. Further, because operations 701 to 717 of FIG. 7 may be performed by the electronic device 101 of FIG. 1, the reference numerals of FIG. 1 will be used.

In operation 711, the processor 120 may determine which user input has been received. For example, if no user input is received, the processor 120 may continue to perform operation 709. As another example, if a user input for the some contents displayed in the specific area on the first webpage has been received, the processor 120 may proceed to operation 713. As another example, if a (specific) user input that is different from the user input for the some contents, the processor 120 may proceed to operation 717.

In operation 713, because the user input for the some contents displayed in the specific area has been received, the processor 120 may receive a resource related to the remaining contents included in the second webpage through a network. For example, because the (sub) resource related to the some contents included in the second webpage has been received in operation 707, the processor 120 may receive the resource related to the remaining contents included in the second webpage through the network.

In operation 715, the processor 120 may display all the contents included in the second webpage on the display 160 by using the resource (received in operation 707) related to the some contents and the resource (received in operation 713) related to the remaining contents. For example, the first webpage displayed on the display 160 may be changed to the second webpage.

In operation 717, because another (specific) user input that is different from the user input for the some contents has been received, the processor 120 may remove the some contents displayed in the specific area from the first webpage. The processor 120 may restore locations of the items included in the first webpage and may return to operation 701. The second (specific) user input that is different from the user input for the some contents, for example, may include a cancel input or an input for an area of the first webpage, except for the specific area.

According to various embodiments of the present disclosure, the electronic device may determine whether the resource related to the remaining contents has been received, based on the user input. Through this, unlike FIGS. 4 to 6, the electronic device may not consume unnecessary data traffics when the user does not desire to change the first webpage to the second webpage.

In the various embodiments described with reference to FIGS. 1 to 7, the user selects a specific item included in the first webpage. However, according to various embodiments, the user may input a specific search word and select a specific button from the first webpage instead of selecting the specific item. In this case, the electronic device may analyze a context by estimating the search word as the keyword. Through this, the user may be provided with a search result corresponding to the search word very conveniently through the specific area of the first webpage.

Further, according to various embodiments, the item linked to the second webpage may be included in an execution screen of a specific application program instead of the first webpage. For example, the item (e.g., an URL in which a hyperlink is set) linked to the second webpage may be included in the execution screen of an instant message application. If the item is selected by the user, the browser may not be executed additionally, and some contents of the second webpage may be displayed in a specific area of the execution screen.

As described above, an electronic device may include a communication circuit, a display including a first side extending in a first direction, and a second side extending in a second direction that is substantially perpendicular to the first direction, a processor electrically connected to the communication circuit and the display, and a memory electrically connected to the processor. The memory stores instructions which, when executed, cause the processor to display a web browser at at least a part of the display, receive first information related to a first webpage including a plurality of items linked to a plurality of webpages, respectively, and arranged in one of the first direction or the second direction on the display, display the first webpage on the web browser by using the received first information, receive a user input for selecting a first item of the displayed plurality of items of the first webpage, move a second item of the plurality of items that is immediately next to the first item such that the second item becomes far away from the first item in the one direction on the web browser, and display at least some of contents included in the second webpage linked to the first item in a space between the first item and the moved second item.

In an electronic device according to another embodiment, at least one of the plurality of items may include a text string.

In an electronic device according to another embodiment, the instructions may cause the processor to display some of the contents included in a second webpage linked to the first item in the space between the first item and the moved second item.

In an electronic device according to another embodiment, the instructions may processor to receive second information related to some of the contents included in the second webpage by using the communication circuit in response to the user input, and display some of the contents in the space by using the second information.

In an electronic device according to another embodiment, the second webpage has a first data size as a whole, and the second webpage may have a second data size that is smaller than the first data size.

In an electronic device according to another embodiment, some of the contents may include only a text.

In an electronic device according to another embodiment, the instructions may cause the processor to identify a log of a user of the electronic device in the memory, and selectively receive the second information from the external device based on the identified log.

In an electronic device according to another embodiment, the instructions may cause the processor to transmit a request for some of the contents including a text to the external device.

An electronic device according to another embodiment, the at least some of the contents included in the second webpage may specified based on an analysis of a keyword associated with the selected first item.

An electronic device according to an embodiment of the present disclosure may include a display, a communication circuit that sets communication with a network, a processor electrically connected to the communication circuit and the display, and a memory electrically connected to the processor. The memory stores instructions which, when executed, cause the processor to display a first webpage including at least one item on the display, if one of the at least one item is selected, extract a keyword from the selected item, specify some contents in a second webpage linked to the selected item and including one or more contents, based on the extracted keyword, receive a resource related to the some contents through the communication circuit, and display the some contents in a specific area on the first webpage by using the received resource.

In an electronic device according to another embodiment, the memory may further store instructions that cause the processor to, if a specific user input is received, remove the some contents displayed in the specific area.

In an electronic device according to another embodiment, the specific user input may include a cancel input, or an input for an area of the first webpage, except for the specific area.

In an electronic device according to another embodiment, the memory may further store instructions that cause the processor to, if a user input for the some contents displayed in the specific area is received, receive a resource related to the remaining contents included in the second webpage through the communication circuit.

In an electronic device according to another embodiment, the memory may further store instructions that cause the processor to display contents included in the second webpage on the display by using a resource related to the some contents and a resource related to the remaining contents.

In an electronic device according to another embodiment, the memory may further store instructions that cause the processor to, if a specific time elapses after the some contents are displayed in the specific area, receive a resource related to the remaining contents included in the second webpage through the communication circuit.

In an electronic device according to another embodiment, the memory may further store instructions that cause the processor to, if a user input for the some contents is received, display contents included in the second webpage on the display by using a resource related to the some contents and a resource related to the remaining contents.

In an electronic device according to another embodiment, the memory may further store instructions that cause the processor to store a resource related to the some contents or a resource related to the remaining contents in the memory as log data. At least a part of the resource stored in the memory may be used to display contents by the display.

An electronic device according to another embodiment, the at least one item may include a text string.

In an electronic device according to another embodiment, the keyword may be extracted from at least one of a text, a tag, or meta information of the selected item.

In an electronic device according to another embodiment, the memory may further store instructions that cause the processor to receive a main resource of the second webpage through the communication circuit, analyze a context of the extracted keyword for the main resource, and specify the some contents by specifying a part of the main resource corresponding to the extracted keyword according to the analysis of the context.

In an electronic device according to another embodiment, the memory may further store instructions that cause the processor to receive a sub resource of a part of the main resource, which corresponds to the extracted keyword, through a communication circuit.

In an electronic device according to another embodiment, the sub resource may include at least one of a CSS file, a JavaScript file, an image file, a video file, or an audio file regarding a part corresponding to the extracted keyword.

In an electronic device according to another embodiment, the specific area may be secured while being overlaid on the first webpage.

In an electronic device according to another embodiment, the specific area may be secured by moving at least one item included in the first webpage.

In an electronic device according to another embodiment, the memory may further store instructions that cause the processor to if one of the at least one item included in the first webpage is selected, move at least one second item that is immediately next to the selected item in one of the first direction or the second direction such that the at least one second item becomes far away from the selected item. The first direction and the second direction may correspond to a first side of the display and a second side extending in a direction that is perpendicular to the first side, the at least one item may be arranged in one of the first direction or the second direction, and a space between the selected item and the moved at least one item may correspond to the specific area.

A method for providing contents of an electronic device according to an embodiment may include an operation of display a first webpage including at least one item on the display, an operation of if one of the at least one item is selected, extracting a keyword from the selected item, an operation of specifying some contents in a second webpage linked to the selected item and including one or more contents, based on the extracted keyword, an operation of receiving a resource related to the some contents through a network, and an operation of displaying the some contents in a specific area on the first webpage by using the received resource.

A method for providing contents according to another embodiment may further include an operation of, a specific time elapses after the some contents are displayed in the specific area, receiving a resource related to the remaining contents included in the second webpage through the network.

A method for providing contents according to another embodiment may further include an operation of, if a user input for the some contents is received, displaying contents included in the second webpage on the display by using a resource related to the some contents and a resource related to the remaining contents.

A method for providing contents according to another embodiment may further include an operation of storing a resource related to the some contents and a resource related to the remaining contents in the memory of the electronic device as log data. At least a part of the resource stored in the memory may be used to display contents by the display.

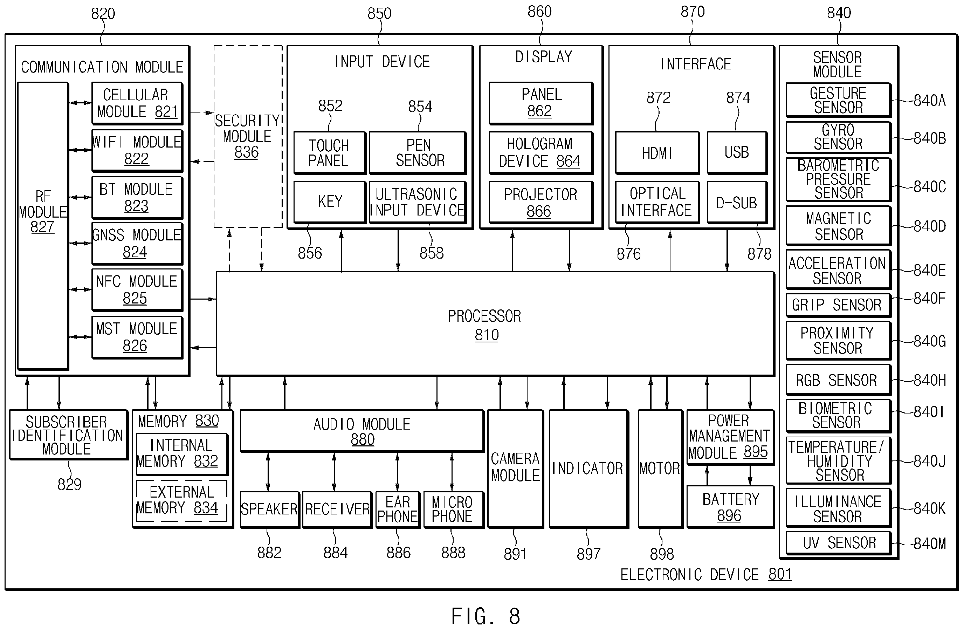

FIG. 8 illustrates a block diagram of an electronic device, according to various embodiments.

Referring to FIG. 8, an electronic device 801 may include, for example, all or a part of the electronic device 101 illustrated in FIG. 1. The electronic device 801 may include one or more processors (e.g., an application processor (AP)) 810, a communication module 820, a subscriber identification module 829, a memory 830, a sensor module 840, an input device 850, a display 860, an interface 870, an audio module 880, a camera module 891, a power management module 895, a battery 896, an indicator 897, and a motor 898.

The processor 810 may drive, for example, an operating system (OS) or an application to control a plurality of hardware or software elements connected to the processor 810 and may process and compute a variety of data. For example, the processor 810 may be implemented with a System on Chip (SoC). According to an embodiment, the processor 810 may further include a graphic processing unit (GPU) and/or an image signal processor. The processor 810 may include at least a part (e.g., a cellular module 821) of elements illustrated in FIG. 8. The processor 810 may load a command or data, which is received from at least one of other elements (e.g., a nonvolatile memory), into a volatile memory and process the loaded command or data. The processor 810 may store a variety of data in the nonvolatile memory.

The communication module 820 may be configured the same as or similar to the communication circuit 170 of FIG. 1. The communication module 820 may include the cellular module 821, a Wi-Fi module 822, a Bluetooth (BT) module 823, a GNSS module 824 (e.g., a GPS module, a Glonass module, a Beidou module, or a Galileo module), a near field communication (NFC) module 825, a MST module 826 and a radio frequency (RF) module 827.

The cellular module 821 may provide, for example, voice communication, video communication, a character service, an Internet service, or the like over a communication network. According to an embodiment, the cellular module 821 may perform discrimination and authentication of the electronic device 801 within a communication network by using the subscriber identification module (e.g., a SIM card) 829. According to an embodiment, the cellular module 821 may perform at least a portion of functions that the processor 810 provides. According to an embodiment, the cellular module 821 may include a communication processor (CP).

Each of the Wi-Fi module 822, the BT module 823, the GNSS module 824, the NFC module 825, or the MST module 826 may include a processor for processing data exchanged through a corresponding module, for example. According to an embodiment, at least a part (e.g., two or more) of the cellular module 821, the Wi-Fi module 822, the BT module 823, the GNSS module 824, the NFC module 825, and the MST module 826 may be included within one Integrated Circuit (IC) or an IC package.

For example, the RF module 827 may transmit and receive a communication signal (e.g., an RF signal). For example, the RF module 827 may include a transceiver, a power amplifier module (PAM), a frequency filter, a low noise amplifier (LNA), an antenna, or the like. According to another embodiment, at least one of the cellular module 821, the Wi-Fi module 822, the BT module 823, the GNSS module 824, the NFC module 825, or the MST module 826 may transmit and receive an RF signal through a separate RF module.

The subscriber identification module 829 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 830 (e.g., the memory 130) may include an internal memory 832 or an external memory 834. For example, the internal memory 832 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 834 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 834 may be operatively and/or physically connected to the electronic device 801 through various interfaces.

A security module 836 may be a module that includes a storage space of which a security level is higher than that of the memory 830 and may be a circuit that guarantees safe data storage and a protected execution environment. The security module 836 may be implemented with a separate circuit and may include a separate processor. For example, the security module 836 may be in a smart chip or a secure digital (SD) card, which is removable, or may include an embedded secure element (eSE) embedded in a fixed chip of the electronic device 801. Furthermore, the security module 836 may operate based on an operating system (OS) that is different from the OS of the electronic device 801. For example, the security module 836 may operate based on java card open platform (JCOP) OS.

The sensor module 840 may measure, for example, a physical quantity or may detect an operation state of the electronic device 801. The sensor module 840 may convert the measured or detected information to an electric signal. For example, the sensor module 840 may include at least one of a gesture sensor 840A, a gyro sensor 840B, a barometric pressure sensor 840C, a magnetic sensor 840D, an acceleration sensor 840E, a grip sensor 840F, the proximity sensor 840G, a color sensor 840H (e.g., red, green, blue (RGB) sensor), a biometric sensor 8401, a temperature/humidity sensor 840J, an illuminance sensor 840K, or an UV sensor 840M. Although not illustrated, additionally or alternatively, the sensor module 840 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 840 may further include a control circuit for controlling at least one or more sensors included therein. According to an embodiment, the electronic device 801 may further include a processor that is a part of the processor 810 or independent of the processor 810 and is configured to control the sensor module 840. The processor may control the sensor module 840 while the processor 810 remains at a sleep state.

The input device 850 may include, for example, a touch panel 852, a (digital) pen sensor 854, a key 856, or an ultrasonic input unit 858. For example, the touch panel 852 may use at least one of capacitive, resistive, infrared and ultrasonic detecting methods. Also, the touch panel 852 may further include a control circuit. The touch panel 852 may further include a tactile layer to provide a tactile reaction to a user.

The (digital) pen sensor 854 may be, for example, a part of a touch panel or may include an additional sheet for recognition. The key 856 may include, for example, a physical button, an optical key, a keypad, or the like. The ultrasonic input device 858 may detect (or sense) an ultrasonic signal, which is generated from an input device, through a microphone (e.g., a microphone 888) and may check data corresponding to the detected ultrasonic signal.

The display 860 (e.g., the display 160) may include a panel 862, a hologram device 864, or a projector 866. The panel 862 may be the same as or similar to the display 160 illustrated in FIG. 1. The panel 862 may be implemented, for example, to be flexible, transparent or wearable. The panel 862 and the touch panel 852 may be integrated into a single module. The hologram device 864 may display a stereoscopic image in a space using a light interference phenomenon. The projector 866 may project light onto a screen so as to display an image. For example, the screen may be arranged in the inside or the outside of the electronic device 801. According to an embodiment, the display 860 may further include a control circuit for controlling the panel 862, the hologram device 864, or the projector 866.

The interface 870 may include, for example, a high-definition multimedia interface (HDMI) 872, a universal serial bus (USB) 874, an optical interface 876, or a D-subminiature (D-sub) 878. The interface 870 may be included, for example, in the communication circuit 170 illustrated in FIG. 1. Additionally or alternatively, the interface 870 may include, for example, a mobile high definition link (MHL) interface, a SD card/multi-media card (MMC) interface, or an infrared data association (IrDA) standard interface.

The audio module 880 may convert a sound and an electric signal in dual directions. At least a part of the audio module 880 may be included, for example, in the input/output interface 150 illustrated in FIG. 1. The audio module 880 may process, for example, sound information that is input or output through a speaker 882, a receiver 884, an earphone 886, or the microphone 888.

For example, the camera module 891 may shoot a still image or a video. According to an embodiment, the camera module 891 may include at least one or more image sensors (e.g., a front sensor or a rear sensor), a lens, an image signal processor (ISP), or a flash (e.g., an LED or a xenon lamp).

The power management module 895 may manage, for example, power of the electronic device 801. According to an embodiment, a power management integrated circuit (PMIC), a charger IC, or a battery or fuel gauge may be included in the power management module 895. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 896 and a voltage, current or temperature thereof while the battery is charged. The battery 896 may include, for example, a rechargeable battery and/or a solar battery.

The indicator 897 may display a specific state of the electronic device 801 or a part thereof (e.g., the processor 810), such as a booting state, a message state, a charging state, and the like. The motor 898 may convert an electrical signal into a mechanical vibration and may generate the following effects: vibration, haptic, and the like. Although not illustrated, a processing device (e.g., a GPU) for supporting a mobile TV may be included in the electronic device 801. The processing device for supporting the mobile TV may process media data according to the standards of digital multimedia broadcasting (DMB), digital video broadcasting (DVB), MediaFlo™, or the like.

Each of the above-mentioned elements of the electronic device according to various embodiments of the present disclosure may be configured with one or more components, and the names of the elements may be changed according to the type of the electronic device. In various embodiments, the electronic device may include at least one of the above-mentioned elements, and some elements may be omitted or other additional elements may be added. Furthermore, some of the elements of the electronic device according to various embodiments may be combined with each other so as to form one entity, so that the functions of the elements may be performed in the same manner as before the combination.

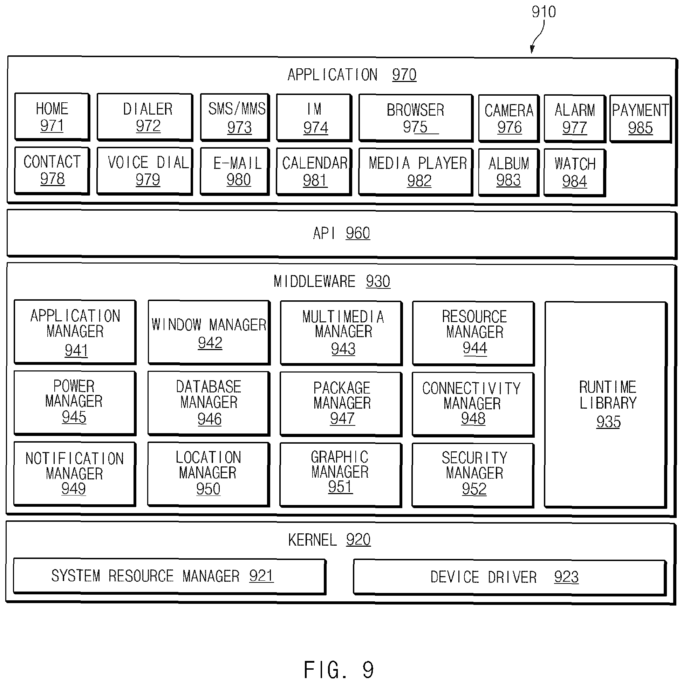

FIG. 9 illustrates a block diagram of a program module, according to various embodiments.

According to an embodiment, a program module 910 (e.g., the program 140) may include an operating system (OS) to control resources associated with an electronic device (e.g., the electronic device 101), and/or diverse applications (e.g., the application program 147) driven on the OS. The OS may be, for example, Android™, iOS™, Windows™, Symbian™, Tizen™, or Bada™.

The program module 910 may include a kernel 920, a middleware 930, an application programming interface (API) 960, and/or an application 970. At least a portion of the program module 910 may be preloaded on an electronic device or may be downloadable from an external electronic device (e.g., the first electronic device 102, the second electronic device 104, the server 106, or the like).

The kernel 920 (e.g., the kernel 141) may include, for example, a system resource manager 921 or a device driver 923. The system resource manager 921 may perform control, allocation, or retrieval of system resources. According to an embodiment, the system resource manager 921 may include a process managing unit, a memory managing unit, or a file system managing unit. The device driver 923 may include, for example, a display driver, a camera driver, a Bluetooth driver, a shared memory driver, a USB driver, a keypad driver, a Wi-Fi driver, an audio driver, or an inter-process communication (IPC) driver.

The middleware 930 may provide, for example, a function that the application 970 needs in common, or may provide diverse functions to the application 970 through the API 960 to allow the application 970 to efficiently use limited system resources of the electronic device. According to an embodiment, the middleware 930 (e.g., the middleware 143) may include at least one of a runtime library 935, an application manager 941, a window manager 942, a multimedia manager 943, a resource manager 944, a power manager 945, a database manager 946, a package manager 947, a connectivity manager 948, a notification manager 949, a location manager 950, a graphic manager 951, a security manager 952, or a payment manager 954.

The runtime library 935 may include, for example, a library module that is used by a compiler to add a new function through a programming language while the application 970 is being executed. The runtime library 935 may perform input/output management, memory management, or capacities about arithmetic functions.

The application manager 941 may manage, for example, a life cycle of at least one application of the application 970. The window manager 942 may manage a graphic user interface (GUI) resource that is used in a screen. The multimedia manager 943 may identify a format necessary for playing diverse media files, and may perform encoding or decoding of media files by using a codec suitable for the format. The resource manager 944 may manage resources such as a storage space, memory, or source code of at least one application of the application 970.

The power manager 945 may operate, for example, with a basic input/output system (BIOS) to manage a battery or power, and may provide power information for an operation of an electronic device. The database manager 946 may generate, search for, or modify database that is to be used in at least one application of the application 970. The package manager 947 may install or update an application that is distributed in the form of package file.

The connectivity manager 948 may manage, for example, wireless connection such as Wi-Fi or Bluetooth. The notification manager 949 may display or notify an event such as arrival message, appointment, or proximity notification in a mode that does not disturb a user. The location manager 950 may manage location information about an electronic device. The graphic manager 951 may manage a graphic effect that is provided to a user, or manage a user interface relevant thereto. The security manager 952 may provide a general security function necessary for system security, user authentication, or the like. According to an embodiment, in the case where an electronic device (e.g., the electronic device 101) includes a telephony function, the middleware 930 may further include a telephony manager for managing a voice or video call function of the electronic device.

The middleware 930 may include a middleware module that combines diverse functions of the above-described elements. The middleware 930 may provide a module specialized to each OS kind to provide differentiated functions. Additionally, the middleware 930 may dynamically remove a part of the preexisting elements or may add new elements thereto.

The API 960 (e.g., the API 145) may be, for example, a set of programming functions and may be provided with a configuration that is variable depending on an OS. For example, in the case where an OS is Android™ or iOS™, it may provide one API set per platform. In the case where an OS is Tizen™, it may provide two or more API sets per platform.

The application 970 (e.g., the application program 147) may include, for example, one or more applications capable of providing functions for a home 971, a dialer 972, an SMS/MMS 973, an instant message (IM) 974, a browser 975, a camera 976, an alarm 977, a contact 978, a voice dial 979, an e-mail 980, a calendar 981, a media player 982, an album 983, a timepiece 984, and a payment 985 or for offering health care (e.g., measuring an exercise quantity, blood sugar, or the like) or environment information (e.g., information of barometric pressure, humidity, temperature, or the like).

According to an embodiment, the application 970 may include an application (hereinafter referred to as "information exchanging application" for descriptive convenience) to support information exchange between an electronic device (e.g., the electronic device 101) and an external electronic device (e.g., the electronic device 102 or 104). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device (e.g., the electronic device 102 or 104). Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of elements) or adjustment of brightness (or resolution) of a display) of the external electronic device (e.g., the electronic device 102 or 104) which communicates with the electronic device, an application running in the external electronic device, or a service (e.g., a call service, a message service, or the like) provided from the external electronic device.

According to an embodiment, the application 970 may include an application (e.g., a health care application of a mobile medical device) that is assigned in accordance with an attribute of an external electronic device (e.g., the electronic device 102 or 104). According to an embodiment, the application 970 may include an application that is received from an external electronic device (e.g., the server 106 or the electronic device 102 or 104). According to an embodiment, the application 970 may include a preloaded application or a third party application that is downloadable from a server. The names of elements of the program module 910 according to the embodiment may be modifiable depending on kinds of operating systems.

According to various embodiments, at least a portion of the program module 910 may be implemented by software, firmware, hardware, or a combination of two or more thereof. At least a portion of the program module 910 may be implemented (e.g., executed), for example, by the processor (e.g., the processor 810). At least a portion of the program module 910 may include, for example, modules, programs, routines, sets of instructions, processes, or the like for performing one or more functions.

The term "module" used in this disclosure may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 130.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, the one or more instructions may contain a code made by a compiler or a code executable by an interpreter. The above hardware unit may be configured to operate via one or more software modules for performing an operation according to various embodiments, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display;
a communication circuit configured to set communication with a network;
a processor electrically connected to the communication circuit and the display; and
a memory electrically connected to the processor,
wherein the memory stores instructions which, when executed, cause the processor to:
display a first webpage including at least one item on the display,
if one of the at least one item is selected, extract a keyword from the selected item,
specify some contents in a second webpage linked to the selected item and including one or more contents, based on the extracted keyword,
receive a resource related to the some contents through the communication circuit, and
display the some contents in a specific area on the first webpage by using the received resource.

2. The electronic device of claim 1, wherein the memory further stores instructions which, when executed, cause the processor to:
if a specific user input is received, remove the some contents displayed in the specific area.

3. The electronic device of claim 2, wherein the specific user input includes a cancel input or an input for an area except for the specific area of the first webpage.

4. The electronic device of claim 1, wherein the memory further stores instructions which, when executed, cause the processor to:
a user input for the some contents displayed in the specific area is received, receive a resource related to remaining contents included in the second webpage through the communication circuit.

5. The electronic device of claim 4, wherein the memory further stores instructions which, when executed, cause the processor to:
display contents included in the second webpage on the display by using a resource related to the some contents and a resource related to the remaining contents.

6. The electronic device of claim 1, wherein the memory further stores instructions which, when executed, cause the processor to:
if a specific time elapses after the some contents are displayed in the specific area, receive a resource related to the remaining contents included in the second webpage through the communication module.

7. The electronic device of claim 6, wherein the memory further stores instructions which, when executed, cause the processor to:
if a user input for the some contents is received, display contents included in the second webpage on the display by using a resource related to the some contents and a resource related to the remaining contents.

8. The electronic device of claim 6, wherein the memory further stores instructions which, when executed, cause the processor to:
store a resource related to the some contents or a resource related to the remaining contents in the memory as log data, and
wherein at least a part of the resource stored in the memory is used to display contents by the display.

9. The electronic device of claim 1, wherein the at least one item includes a text string.

10. The electronic device of claim 1, wherein the keyword is extracted from at least one of a text, a tag, or meta information of the selected item.

11. The electronic device of claim 1, wherein the memory further stores instructions which, when executed, cause the processor to:
receive a main resource of the second webpage through the communication circuit;
analyze a context of the extracted keyword with respect to the main resource; and
specify the some contents by specifying a part of the main resource corresponding to the extracted keyword according to the analysis of the context.

12. The electronic device of claim 11, wherein the memory further stores instructions which, when executed, cause the processor to:
receive a sub-resource of the part of the main resource corresponding to the extracted keyword through the communication circuit.

13. The electronic device of claim 1, wherein the specific area is secured while being overlaid on the first webpage.

14. The electronic device of claim 1, wherein the specific area is secured as the at least one item included in the first webpage is moved.

15. The electronic device of claim 14, wherein the memory further stores instructions which, when executed, cause the processor to:
if one of the at least one item included in the first webpage is selected, move at least one first item that is immediately next to the selected item in one of the first direction or the second direction such that the at least one first item becomes far away from the selected item,
wherein the first direction and the second direction correspond to a first side of the display and a second side extending in a direction that is perpendicular to the first side, respectively,
wherein the at least one first item is arranged in one of the first direction or the second direction, and
wherein a space between the selected item and the moved at least one first item corresponds to the specific area.
